# FASCICULE DE BREVET EUROPEEN

(11) **EP 1 298 031 B1**
(45) Date de publication et mention de la délivrance du brevet: **03.11.2004**
(21) Numéro de dépôt: 02356190.5
(22) Date de dépôt: 01.10.2002
(51) Int. Cl.: B62D 3/12

(54) **Direction à crémaillère pour véhicule automobile**
Zahnstangenlenkung für ein Kraftfahrzeug
Rack-and-pinion steering gear for motor vehicle

(30) Priorité: 01.10.2001 FR 0112614
(43) Date de publication de la demande: 02.04.2003
(73) Titulaire: Société de Mécanique d'Irigny, 69540 Irigny (FR)
(72) Inventeur: Couchoux, Dominique, 69510 Thurins (FR)
(74) Mandataire: Bratel, Gérard

(56) Documents cités:
- DE-A- 19 917 392
- US-A- 4 063 490
- PATENT ABSTRACTS OF JAPAN vol. 1997, no. 10, 31 octobre 1997 (1997-10-31) -& JP 09 169280 A (TOYODA MACH WORKS LTD), 30 juin 1997 (1997-06-30)
- PATENT ABSTRACTS OF JAPAN vol. 1999, no. 04, 30 avril 1999 (1999-04-30) -& JP 11 011336 A (UNISIA JECS CORP), 19 janvier 1999 (1999-01-19)

## Description

La présente invention concerne, de façon générale, les systèmes de direction pour véhicules automobiles. Elle se rapporte, plus particulièrement, aux directions à crémaillé telles que définies dans le préambule de la revendication 1 et connues par exemple du document US 4063490A, pourvues d'un dispositif d'assistance hydraulique incluant une valve d'assistance, coaxiale au pignon de direction qui vient en prise avec la crémaillère. Encore plus spécialement, l'invention s'intéresse à un dispositif qui, pour ce genre de direction, assure un équilibrage entre les pressions d'air à l'intérieur de la direction et l'extérieur de celle-ci.

Une direction à crémaillère de véhicule automobile est habituellement réalisée de façon totalement étanche, afin d'éviter toute entrée indésirable d'eau ou d'humidité à l'intérieur de la direction. Ceci pose toutefois des problèmes de surpression ou de dépression dans la direction, en fonction de l'augmentation ou de la baisse de température environnante, la surpression ou dépression entraînant une déformation exagérée des soufflets de la direction, avec pour conséquence une détérioration ou destruction de ces soufflets.

Certes, il a été déjà envisagé de réaliser des directions avec soufflets "respirants", qui permettent l'entrée ou la sortie d'air -voir par exemple le document DE 199 17 392 A. Toutefois, cette solution nécessite une fabrication spéciale, donc complexe et coûteuse, des soufflets.

Par ailleurs, si l'on considère la structure d'une direction assistée hydraulique, celle-ci comporte habituellement un corps de carter de direction principal, logeant la crémaillère, et un carter auxiliaire logeant la valve d'assistance. Le carter de la valve d'assistance est assemblé au carter de la crémaillère, avec interposition d'un joint d'étanchéité, en particulier un joint annulaire plat en matière du genre caoutchouc, placé dans un logement de forme annulaire correspondante. En l'état actuel de la technique, ce joint assure une étanchéité totale, tant vis-à-vis des liquides que des gaz, de manière à éviter toute pénétration d'eau ou d'air extérieur dans la direction.

Dans le cas d'une direction assistée électrique, actuellement de plus en plus courante, ce n'est pas un carter logeant la valve d'assistance, mais un carter auxiliaire logeant un capteur de couple, qui se trouve assemblé au corps de carter principal, avec interposition d'un point d'étanchéité.

D'une manière analogue, le carter d'une direction à crémaillère, manuelle ou assistée, de véhicule automobile peut être divisé en deux parties, qui sont respectivement un corps de carter principal et une partie auxiliaire de carter de section réduite, ou un corps de carter principal et une partie auxiliaire de carter logeant un capteur quelconque, tel qu'un capteur de position. Dans ces réalisations, également, un joint d'étanchéité est interposé entre les deux parties de carter, à l'endroit où elles-ci sont réunies.

La présente invention a pour but de fournir une direction à crémaillère avec dispositif simple et économique d'équilibrage des pressions entre l'intérieur et l'extérieur de la direction, en vue d'éviter la déformation et la détérioration des soufflets, ce dispositif mettant à profit la structure du carter de la direction assistée.

A cet effet, l'invention a pour objet une direction à crémaillère pour véhicule automobile, possédant un carter en deux parties assemblées l'une à l'autre avec interposition d'un joint d'étanchéité, placé dans un logement correspondant, cette direction à crémaillère étant caractérisée essentiellement par le fait que ledit joint est réalisé, au moins partiellement, en une matière perméable à l'air mais hydrophobe, pour permettre l'équilibrage des pressions entre l'intérieur et l'extérieur de la direction, et éviter ainsi la déformation des soufflets de cette direction.

Ainsi, l'idée à la base de l'invention consiste, tout simplement, à remplacer un joint d'étanchéité existant, habituellement totalement étanche à l'eau et à l'air, par un joint spécial, monté dans le même logement mais réalisé au moins partiellement en une matière perméable à l'air et hydrophobe, ce qui assure l'équilibrage permanent des pressions d'air entre l'intérieur et l'extérieur de la direction (en utilisant aussi la communication habituellement existante entre les deux soufflets de la direction). La solution proposée par l'invention est donc particulièrement simple et économique ; en particulier, elle ne nécessite aucun usinage particulier, ou autre opération de fabrication supplémentaire.

Ce joint est réalisable en polytétrafloréthylène poreux, ou en toute autre matière équivalente. De préférence, le joint notamment réalisé dans une telle matière poreuse est dimensionné, par rapport à son logement, de manière à ne pas se trouver comprimé, à l'état monté, afin de ne pas diminuer la taille de ses pores.

L'invention est plus particulièrement applicable à une direction assistée hydraulique, avec valve d'assistance coaxiale au pignon de direction venant en prise avec la crémaillère, ou à une direction assistée électrique, cette direction assistée possédant un corps de carter principal logeant la crémaillère, et un carter auxiliaire logeant la valve d'assistance ou un capteur de couple ou autre et raccordé au corps de carter principal, auquel cas le joint perméable à l'air mais hydrophobe est placé à la jonction du carter auxiliaire, logeant la valve d'assistance ou le capteur de couple ou autre, et du corps de carter principal logeant la crémaillère.

Bien entendu, le principe de l'invention étant de permettre un passage de l'air entre l'intérieur et l'extérieur de la direction, afin de rendre celle-ci "respirante", il importe que la structure mécanique du carter ne réalise pas elle-même une étanchéité "naturelle" aux gaz entre les deux parties de carter réunies. Il convient donc de choisir l'état de surface de ces parties de carter, dans leur zone d'assemblage, ou de pratiquer dans ces parties des rainures ou autres...

L'invention sera mieux comprise à l'aide de la description qui suit, en référence au dessin schématique annexé représentant, à titre d'exemple, une forme d'exécution de cette direction à crémaillère pour véhicule automobile.
Figure 1 est une vue partielle, extérieure, d'une direction assistée à crémaillère conforme à l'invention ;
Figure 2 est une vue en coupe suivant II- II de figure 1, passant par la valve d'assistance de la direction ;
Figure 3 est une vue de détail, en coupe, montrant plus particulièrement la zone d'assemblage des deux parties de carter ;
Figure 4 représente, à échelle encore plus grande, un détail du montage du joint conforme à l'invention.

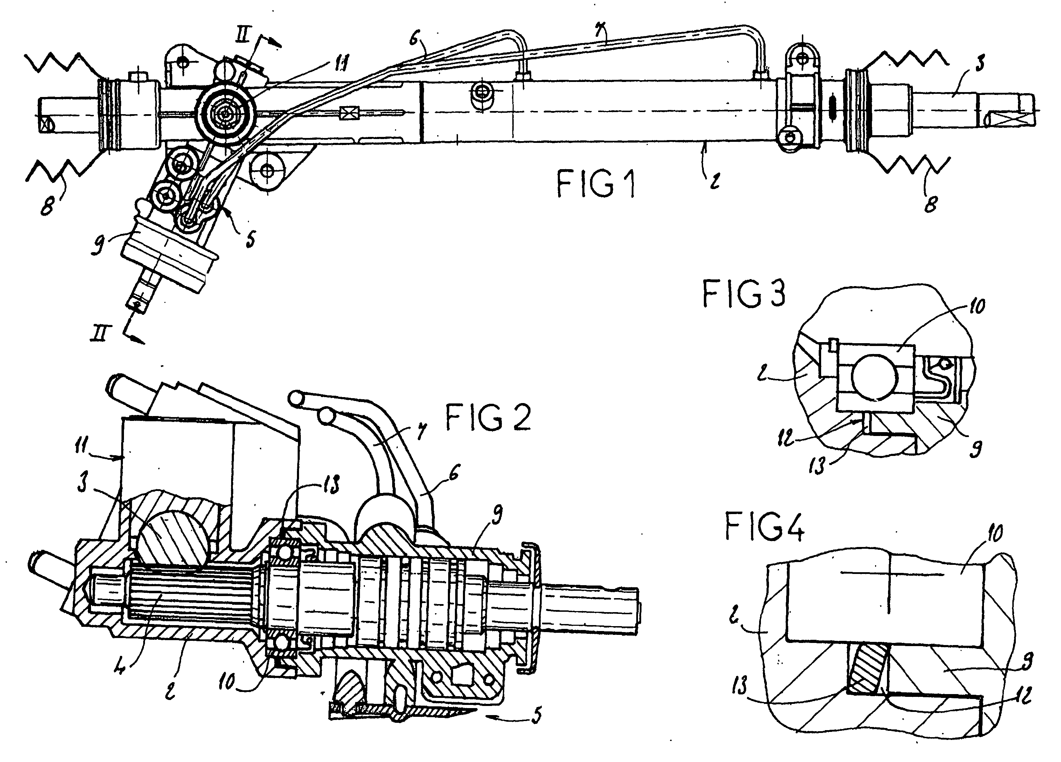

La figure 1 représente extérieurement une direction à crémaillère, qui dans l'exemple illustré est une direction assistée hydraulique. Cette figure montre plus particulièrement le carter central tubulaire 2 de la direction assistée, dans lequel est montée coulissante la crémaillère 3. En se référant aussi à la figure 2, la crémaillère 3 est en prise avec un pignon rotatif 4, lié en rotation à la colonne de direction (non représentée) par l'intermédiaire d'une valve d'assistance 5, que des conduits hydrauliques 6 et 7 relient à la partie « vérin» du carter 2.

Les extrémités droite et gauche de la crémaillère 3, extérieures au carter 2, sont accouplées à des biellettes (non représentées). Deux soufflets 8, raccordés respectivement aux deux extrémités du carter 2, recouvrent et protègent les zones d'extrémité de la crémaillère 3.

La valve d'assistance 5, de structure interne connue en soi et non détaillée ici, possède son propre carter 9. Le carter 9 de la valve d'assistance 5 est réuni au carter 2 de la direction, dans une zone d'assemblage circulaire qui entoure ici un roulement à billes 10, assurant le montage tournant du pignon 4. Comme le montre encore la figure 2, un dispositif de "poussoir" 11, connu en soi et non concerné par la présente invention, appuie la crémaillère 3 contre le pignon 4.

En se référant maintenant plus particulièrement aux figures 3 et 4, qui montrent un détail de la zone d'assemblage par emboîtement des deux carters 2 et 9, il est formé dans cette zone d'assemblage un logement annulaire 12, de section par exemple rectangulaire. Le logement 12 reçoit un joint annulaire 13 correspondant, donc de forme générale annulaire. Ce joint annulaire 13 est réalisé, selon l'invention, en une matière perméable à l'air, mais hydrophobe, rendant possible le passage de l'air entre l'intérieur de la direction, notamment l'intérieur de carter principal 2, d'une part, et l'extérieur, d'autre part. Selon les variations de température, l'air peut donc sortir de la direction ou y rentrer, de manière à équilibrer la pression entre l'intérieur de cette direction et l'extérieur, afin d'éviter la déformation des soufflets 8 et leur détérioration, notamment lorsque la température environnante augmente ou baisse fortement, le passage de l'eau et de l'humidité étant toutefois évité par le joint 13.

Dans le détail, ce joint 13, en forme de rondelle, possède par exemple une section en forme de parallélogramme (voir figure 4), et il est dimensionné de telle sorte que son montage dans le logement 12 correspondant s'effectue pratiquement sans compression, afin de ne pas diminuer la taille des pores de sa matière constitutive.

Par exemple, la matière constitutive du joint 13, perméable à l'air mais hydrophobe, peut être une résine polymérique fluorée poreuse, telle que celle commercialisée sous la dénomination « PERMEON » (marque enregistrée), ou toute autre matière équivalente.

L'on ne s'éloignerait pas du cadre de l'invention, telle que définie dans les revendications annexées, en modifiant les détails de forme du joint 13 et des autres composants, ou en choisissant d'autres matières appropriées pour ce joint, ou encore en destinant le même dispositif à une direction de véhicule automobile, assistée ou non, présentant une autre décomposition de son carter en au moins deux parties, par exemple un corps de carter principal et une partie auxiliaire de carter de section réduite, ou un corps de carter principal et une partie auxiliaire de carter logeant un capteur, par exemple un capteur de couple dans le cas d'une direction assistée électrique, le dispositif prenant toujours place à la jonction de deux parties de carter.

## Revendications

1. Direction à crémaillère pour véhicule automobile, possédant un carter en deux parties (2, 9) assemblées l'une à l'autre avec interposition d'un joint d'étanchéité (13), placé dans un logement (12) correspondant, ainsi que deux soufflets (8) raccordés au carter et protégeant la crémaillère (3), **caractérisée en ce que** ledit joint (13) est réalisé, au moins partiellement, en une matière perméable à l'air mais hydrophobe, pour permettre l'équilibrage des pressions entre l'intérieur et l'extérieur de la direction, et éviter ainsi la déformation des soufflets (8) de cette direction.

2. Direction à crémaillère selon la revendication 1, **caractérisée en ce que** le joint (13) est réalisé en polytétrafluoréthylène poreux.

3. Direction à crémaillère selon la revendication 1 ou 2, **caractérisée en ce que** le joint (13) est dimensionné, par rapport à son logement (12), de manière à ne pas se trouver comprimé, à l'état monté.

4. Direction à crémaillère selon l'une quelconque des revendications 1 à 3, la direction étant une direction assistée hydraulique, avec valve d'assistance (5) coaxiale au pignon de direction (4) venant en prise avec la crémaillère (3), ou une direction assistée électrique, cette direction possédant un corps de carter principal (2) logeant la crémaillère (3), et un carter auxiliaire (9) logeant la valve d'assistance (5), ou un capteur de couple ou autre, **caractérisée en ce que** le joint (13) perméable à l'air mais hydrophobe est placé à la jonction du carter auxiliaire (9), logeant la valve d'assistance (5) ou le capteur de couple ou autre, et du corps de carter principal (2) logeant la crémaillère (3).

## Patentansprüche

1. Zahnstangenlenkung für ein Kraftfahrzeug, mit einem Gehäuse, das aus zwei Teilen (2, 9) besteht, welche miteinander unter Zwischenschaltung einer Dichtung (13) zusammengebaut sind, die in einem entsprechenden Sitz (12) angeordnet ist, sowie mit zwei Faltenbälgen (8), welche mit dem Gehäuse verbunden sind und die Zahnstange (3) schützen,
**dadurch gekennzeichnet,**
**daß** die Dichtung (13) zumindest teilweise aus einem luftdurchlässigen, aber wasserabweisenden Material gefertigt ist, um einen Ausgleich zwischen den Drücken innerhalb und außerhalb der Lenkung zu ermöglichen und somit eine Verformung der Faltenbälge (8) der Lenkung zu vermeiden.

2. Zahnstangenlenkung nach Anspruch 1,
**dadurch gekennzeichnet,**
**daß** die Dichtung (13) aus porösem Polytetrafluorethylen gefertigt ist.

3. Zahnstangenlenkung nach Anspruch 1 oder 2,
**dadurch gekennzeichnet,**
**daß** die Größe der Dichtung (13) bezüglich ihres Sitzes (12) so bemessen ist, daß sie im eingebauten Zustand nicht zusammengedrückt wird.

4. Zahnstangenlenkung nach einem der Ansprüche 1 bis 3,
wobei die Lenkung eine hydraulisch unterstützte Lenkung mit einem Servoventil (5), das koaxial zum Lenkungsritzel (4) liegt, welches in Eingriff mit der Zahnstange (3) steht, oder eine elektrisch unterstützte Lenkung ist, wobei die Lenkung einen Hauptgehäusekörper (2) zum Aufnehmen der Zahnstange (3) und ein Nebengehäuse (9) zum Aufnehmen des Servoventils (5) oder eines Drehmomentgebers oder dergleichen aufweist,
**dadurch gekennzeichnet,**
**daß** die luftdurchlässige, aber wasserabweisende Dichtung (13) an der Verbindungsstelle zwischen dem Nebengehäuse (9) zum Aufnehmen des Servoventils (5) oder des Drehmomentgebers oder dergleichen und dem Hauptgehäusekörper (2) zum Aufnehmen der Zahnstange (3) angeordnet ist.

## Claims

1. A rack and pinion steering system for an automobile vehicle, having a housing in two parts (2, 9) which are joined to each other with the interposition of a seal (13) placed in a corresponding seating (12), and also having two bellows (8) which are attached to the housing and which protect the rack (3), **characterised in that** said seal (13) is made, at least in part, of a material which is permeable to air but which is hydrophobic, in order to permit equilibration of pressure between the inside and the outside of the steering system and thus to prevent deformation of the bellows (8) of said steering system.

2. A rack and pinion steering system according to claim 1, **characterised in that** the seal (13) is made of porous polytetrafluoroethylene.

3. A rack and pinion steering system according to claim 1 or 2, **characterised in that** the seal (13) is sized with respect to its seating (12) so that it is not compressed in its installed state.

4. A rack and pinion steering system according to any one of claims 1 to 3, the steering system being a hydraulic power-assisted steering system comprising a control valve (5) coaxial with the steering pinion (4) which meshes with the rack (3), or an electric power-assisted steering system, said steering system having a main housing body (2) which houses the rack (3) and an auxiliary housing (9) which houses the control valve (5) or a torque sensor or other element, **characterised in that** the seal (13) which is permeable to air but which is hydrophobic is placed at the junction between the auxiliary housing (9), which houses the control valve (5) or torque sensor or other element, and the main housing body (2) which houses the rack (3).
